Europäisches Patentamt

European Patent Office

Office européen des brevets

(19)

(11) Publication number: **0 078 904**
**B1**

(12) **EUROPEAN PATENT SPECIFICATION**

(45) Date of publication of patent specification: 03.09.86

(51) Int. Cl.⁴: **C 01 F 11/30**, B 01 D 53/34, C 01 F 11/32

(21) Application number: **82108730.1**

(22) Date of filing: **21.09.82**

(54) Method and apparatus for recovering calcium chloride from spent absorbent liquid in exhaust gas desulfurization process.

(30) Priority: **21.09.81 JP 150151/81**

(43) Date of publication of application:
**18.05.83 Bulletin 83/20**

(45) Publication of the grant of the patent:
**03.09.86 Bulletin 86/36**

(84) Designated Contracting States:
**AT DE FR GB**

(56) References cited:
**DE-A-2 939 744**
**DE-C- 819 689**
**US-A-3 339 618**
**US-A-3 386 798**
**US-A-4 322 393**

(73) Proprietor: **KABUSHIKI KAISHA KOBE SEIKO SHO**
**3-18 1-chome, Wakinohama-cho Chuo-ku**
**Kobe 651 (JP)**

(72) Inventor: **Nada, Junichiro**
**69-17, Shirakawadai 3-chome**
**Suma-ku Kobe-shi (JP)**
Inventor: **Sugiyama, Kimio**
**4-13-2-306, Ohmiya**
**Asahi-ku Osaka-shi (JP)**
Inventor: **Masuda, Toyohiko**
**2-9-30, Maiko-dai**
**Tarumi-ku Kobe-shi (JP)**
Inventor: **Yamagata, Masahiro**
**10-1109, 19 Tsukuda 3-chome**
**Nishiyodogawa-ku Osaka-shi (JP)**
Inventor: **Nishida, Hideo**
**4-5-19, Yoshino**
**Fukushima-ku Osaka-shi (JP)**

(74) Representative: **Patentanwälte Müller-Boré, Deufel, Schön, Hertel, Lewald, Otto et al**
**Postfach 26 02 47 Isartorplatz 6**
**D-8000 München 26 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Background of the Invention

#### 1. Field of the Invention

This invention relates to a method and apparatus for recovering $CaCl_2$ in solid form from a spent liquor occurring in an exhaust gas desulfurization process, and more particularly to a method and apparatus for recovering in a valuable form $CaCl_2$ which builds up in the treating absorbent liquid in a wet lime-gypsum desulfurization process.

#### 2. Description of the Prior Art

In the wet lime-gypsum desulfurization process, $CaSO_3$ which is produced by absorption of $SO_2$ into a treating liquid containing lime components such as $CaCO_3$ and/or $Ca(OH)_2$ is further oxidized into $CaSO_4$ for reuse. The inventors have been engaged in a comprehensive research in this respect, and have already developed and actually applied on an industrial scale the technology of increasing the solubility of the absorbent $Ca(OH)_2$ by adding a suitable amount of $CaCl_2$ to the treating liquid thereby to improve the rate of removal of sulfur oxides.

On the other hand, due to a sudden change in the energy situation, there has been an increasing trend toward relying again on coal. The exhaust gas which results from combustion of coal contains Cl ions in a high concentration of up to 400 ppm in addition to sulfur components like SO, the Cl ions forming $CaCl_2$ by bonding with Ca ions of the lime components, consequently increasing the $CaCl_2$ concentration in the treating liquid. The $CaCl_2$ concentration which has complicated influences on the $SO_2$ absorption reaction, oxidation reaction, quality of gypsum of the by-product and corrosion of component parts of the desulfurization system should be maintained at a predetermined appropriate level even in the above-mentioned improved method of our prior proposal. In order to attain this, it becomes necessary to discharge a large quantity of waste water from the system. However, the discard of waste water is currently under control of strict regulations and needs a treatment which can be economically and technically a great burden. In view of these situations, the present inventors have been engaged in research work to develop a method for recovering in solid form the concentrated $CaCl_2$ content of the treating liquid without necessitating the discard of waste water.

In the $CaCl_2$-added lime-gypsum process, the $CaCl_2$ concentration in the absorbent liquid is at most at the level of 40%, and, in consideration of the saturated concentration of the aqueous $CaCl_2$ solution, it is extremely difficult to recover it efficiently in solid form and in an economical manner. Besides, it was expected that the recovery in solid form might be difficult in the actual operations of the ordinary wet lime-gypsum process in which the absorbent liquid would contain accumulated $CaCl_2$ in much lower con-

centration and require an additional condensing operation for that purpose.

There is an industrially established technology as long as the recovery of the dehydrate from aqueous solution of $CaCl_2$ is concerned. However, in the case of the afore-mentioned exhaust gas desulfurization process, the operation involves various more complicated conditions as compared with the recovery from the aqueous solution of $CaCl_2$ alone. More particularly, experiments of $CaCl_2$ recovery were conducted by the use of: (1) a method of condensing the treating liquid by indirect heating (under atmospheric pressure) in an oil bath; (2) a method of condensing similarly by indirect heating but under reduced pressure; and (3) a method of condensing the liquid by blowing thereinto a hot gas under atmospheric pressure. As a result, it has been found that the methods (1) and (2) have a limitation in the degree of condensation due to vigorous foaming and inability of raising the heating temperature, coupled with the problem that $CaSO_4$ which coexists in the liquid causes scale deposition on the inner surfaces of the condensing vessel, dropping its heat transfer efficiency. The method (3) is advantageous not only in that it can condense the liquid to a desired concentration without the foaming trouble, but also in that its heating mechanism is free of the adverse effect of the scale deposition. Therefore, we repeated experiments for the recovery of $CaCl_2$ in solid form by the method (3), and succeeded in arriving at some attainment as disclosed in our co-pending patent application (Japanese Patent Application No. 55—73457), published in Japan on 25 December 1981 as No. 56—168823.

In U.S. Patent Specification No. 3,339,618 there is described a process for preparing calcium chloride products in powder and granular forms by spraying calcium chloride solution into an essentially dry gas stream at elevated temperature. The product so produced is conveniently recovered by carrying the finely divided powder out of the drying chamber with the drying gas into a gas-solids separating equipment such as a cyclone separator and the used drying gas is then vented to atmosphere. The powder product may be after-treated by compacting and granulation.

In German Patent Application DE—A—29 39 744 there is described a process for purifying flue gases in which sulfur dioxide is removed by washing with a solution containing calcium ions (especially a solution of calcium chloride) and recovered as calcium sulfate, characterised in that the washing stage for removal of the sulfur dioxide is used in conjunction with a separate washing stage in which fluorine and chlorine compounds (especially hydrogen fluoride and hydrogen chloride) are removed. The fluoride is recoverable as insoluble solid calcium fluoride and the chloride is recoverable as calcium chloride by evaporation of part of the washing liquor by contact with part of the hot gas stream in an evaporator, so that calcium chloride crystallises out and is separated from the gas stream.

Summary of the Invention

We continued our research for the industrialisation of the above-mentioned method, taking various approaches by employing different means, in an attempt to establish a method which can recover $CaCl_2$ in solid form under more stabilised operating conditions.

Thus, it is an object of the present invention to provide a method of recovering $CaCl_2$ from the spent absorbent liquid in the exhaust gas desulfurization by the wet lime-gypsum process and collecting $CaCl_2$ in solid form of high utility without causing troubles to the desulfurization process.

According to one aspect of the present invention, there is provided a process for recovering calcium chloride in solid form from the spent absorbent liquid containing calcium sulfate and calcium chloride obtained in the desulfurization of an exhaust gas (especially an exhaust gas resulting from combustion of coal and having a high Cl content) by the wet lime-gypsum process, which comprises using a thickener for removing impurities including calcium sulfate from said liquid, spraying the liquid into a drying chamber while blowing hot air thereinto, whereby the liquid spray is dried to provide a powder of calcium chloride, and separating and collecting the resulting powder of calcium chloride, characterized in that:—

(a) the dried powder is fed to a solid separator by the action of pressure in the drying chamber and pressurized air from a pneumatic fan as transfer gas, and

(b) the separated air from the separator is filtered to remove fine powder particles and then fed back by the pneumatic fan into the transfer gas to serve as carrier for transporting dried powder from the drying chamber to the separator.

According to another aspect of the present invention there is also provided an apparatus for recovering calcium chloride in solid form from a spent absorbent liquid containing calcium sulfate and calcium chloride obtained in the desulfurization of an exhaust gas (especially an exhaust gas resulting from combustion of coal and having a high Cl content) by the wet lime-gypsum process, characterized in that it comprises:—

(a) a thickener for removing impurities including calcium sulfate from said liquid;

(b) a drying chamber for drying said liquid;

(c) a nozzle mounted in the upper portion of said drying chamber for spraying said liquid thereinto;

(d) a blowing opening provided in an upper portion of said drying chamber for blowing hot air thereinto to dry the sprayed liquid and thereby produce a powder of calcium chloride;

(e) transfer means connected to the bottom of the drying chamber for collecting the dried powder of calcium chloride and transferring it to a solid separator;

(f) a filter for removing fine particles from the separated air from the solid separator; and

(g) a pneumatic fan for feeding back at least part of the separated air from the said filter to serve again as carrier gas in transfer means (e).

The above and other objects, features and advantages of the invention will become apparent from the following description and appended claims, taken in conjunction with the accompanying drawings.

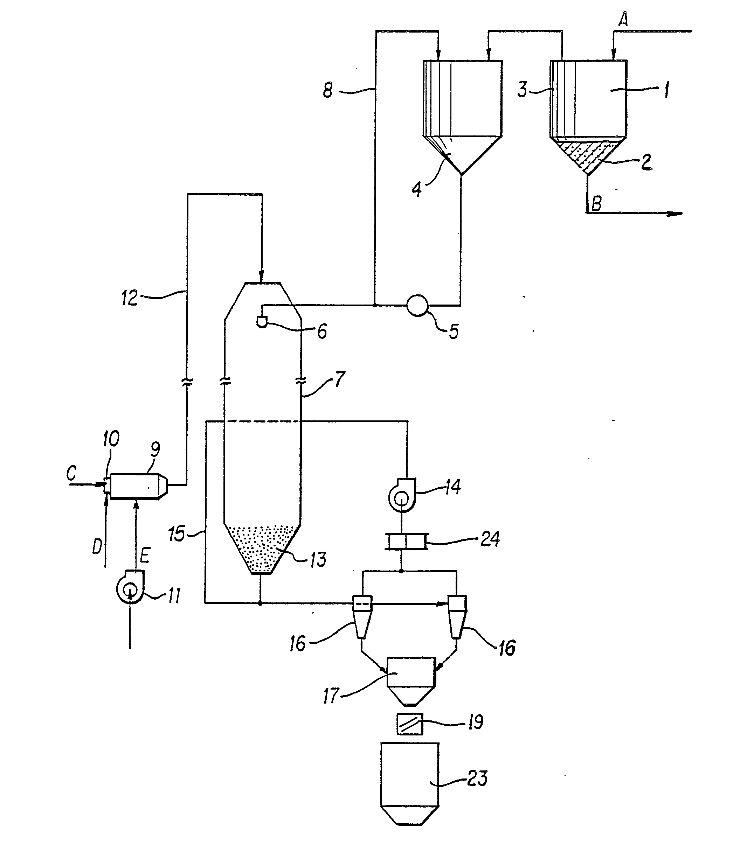

Brief Description of the Drawing

In the accompanying drawing the sole figure is a flowsheet of a recovery system according to the present invention.

Particular Description of the Invention

Hereafter, the invention and its effects are described in connection with the developments of various experiments conducted under the following conditions with regard to:

(A) a method of condensation by hot air blowing; (B) a spray-dry method according to the invention; and (C) a drying method using a drum drier.

Method (A): Spent treating liquid from the exhaust desulfurization process was received in a vessel for flocculating and sedimenting a small amount of suspended solids, and the supernatant liquid was transferred into a condensing vessel after adding thereto a defoaming agent for the sake of safety. The liquid was thickened by blowing hot air thereinto until a slurry was obtained by precipitation of crystals of $CaCl_2 \cdot 2H_2O$, which was put into a centrifugal separator to separate the dihydrate in solid form.

Method (B): The supernatant liquid which was obtained in the same manner as in the foregoing method was sprayed from above into a vertical drying chamber by means of a high pressure pump, while at the same time blowing hot air into the drying chamber from above, bringing them instantaneously into parallel flow contact to produce powder by evaporation. The powder of the dihydrate which was entrained in the air flows was led into a cyclone for separation.

Method (C): The supernatant liquid which was obtained in the same manner as in the foregoing methods was applied thinly around the circumferential surface of a drum which was heated by a heating medium like steam for drying the applied liquid. The dihydrate which was formed by drying was scraped off after each revolution of the drum to separate the solid in the form of flakes.

There was obtained the dihydrate in any one of the Methods (A) to (C), which showed differences in the aspect of operationability as discussed and evaluated in greater detail hereinbelow. In the following description, Methods (A) to (C) are referred to as "a hot air blowing method", "a spray-drier method" and "a drum-drier method", respectively.

*Scaling*

The hot air blowing method gives rise to a medium degree of scaling on the inner wall surfaces of the container although it has no influences on the heat transfer efficiency. However, in the case of a continuous operation, it will necessitate a periodical scale removing operation which is disadvantageous from the standpoint of the maintenance and service of the apparatus and its service life. In contrast, the operation proceeds extremely favorably in this regard in the spray drier method and the drum drier method with substantially no scaling.

*Corrosion of Component Parts*

It is necessary to take some measures against corrosion of component parts in the case of the hot air blowing method in which the apparatus has relatively large liquid contacting surface areas and the liquid temperature sometimes goes up to 110—120°C. In the drum drier method, the drum is used in a heavily corrosive environment since its entire circumferential surface is applied with the treating liquid of a high temperature which reaches as high as 150°C in some cases according to our experiments, also requiring to provide some measures against corrosion. On the other hand, there is no need for providing special corrosion preventing means for the apparatus as a whole in the spray drier method, except the spray nozzle which is the only one component that contacts the treating liquid, and the temperature of the liquid is at most at the level of 50°C.

*Foaming*

The hot air blowing method involves less foaming but there will occur a slight degree of foaming in an operation on a larger scale unless a defoaming agent is added. In contrast, the other two methods are completely free of the foaming problem.

*Pipe Blocking*

The hot air blowing method suffers from clogging of the air blowing pipe due to scaling or blocking of the slurry line by precipitated crystals, in contrast to the other two methods which have no problems of this sort.

*Stability of Operation*

In the case of the hot air blowing method, the operation loses stability due to larger changes in operating condition which are caused depending upon the slurry concentration, the degree of supersaturation, the liquid level in the condensing vessel and the extent of foaming, causing variations in the load of the centrifugal separator. On the other hand, the drying rate is varied slightly by the moisture content in the other two methods, but there occurs no trouble which disturbs the stability of operation in any distinctive degree.

*Quality of Recovered Product (Dihydrate)*

It is impossible to control the particle size of the product in the hot air blowing method in which a slurry of high viscosity is subjected to the centrifugal separation, as well as in the drum drier method in which the product scraped off from the drum surface is in the form of flakes of irregular shapes and sizes. In the spray drier method, however, it is possible to obtain a product which is essentially in the form of fine powder, and to control the particle size by varying the spraying nozzle diameter. Besides, the spray drier method can produce calcium chloride of spherical form which has a wider range of application.

As a result of the comparative evaluations of the methods (A) to (C) in various aspects of the operation as discussed above, it has been concluded that the spray drier method is regarded as the best by overall judgement since it is simplified in process itself, less susceptible to the problems of scaling and corrosion, and capable of controlling the particle size of the product.

The drawing shows a flowsheet of a process incorporating the spray drier method according to the present invention, wherein the spent treating liquid from an exhaust gas desulfurization system is fed to a thickener 1 as indicated by arrow A, returning flocculated or sedimentary impurities 2 like $CaSO_4$ to a solid collecting section of the exhaust gas desulfurization system as indicated by arrow B. The supernatant liquid 3 of the thickener 1 is transferred into a feed liquid storage tank 4 and fed to a nozzle 6 by a feed pump 5 for spraying same into a drying chamber 7. The reference numeral 8 denotes a feedback pipe for returning excess liquid to the tank 4. On the other hand, fuel and combustion air are blown into a burner 10 of a hot blast generating furnace 9 as indicated by arrows C and D, respectively, while blowing a large quantity of air into the furnace by an air blower 11 as indicated by arrow E. The generated hot blasts which are blown into the drying chamber 7 from its top through pipe 12 envelop the sprayed feed liquid from the nozzle to heat and dry the liquid. Although the feed liquid and hot blast are contacted in parallel flow for maintaining an optimum particle density and for making the drying chamber 7 compact, of course there may be employed a counter-flow or crossflow system depending upon the desired properties of the final $CaCl_2$ product. The dried powder 13 which drops into a hopper at the bottom of the drying chamber 7 is fed to a plural number of cyclones 16 (two in the particular example shown) through a transfer pipe 15 by the action of the pressure in the drying chamber 7 and the pressurized air from a pneumatic fan 14, thereby separating the fine and coarse particles from air. The powder thus obtained is dropped into a storage chamber 17, the separated air which still contains very fine particles is passed through a bag filter 24 or the like to remove the fine powder particles and then fed into the transfer gas by the pneumatic fan 14 to serve as a carrier air again. The recovered $CaCl_2$ in the storage chamber 17 is dropped into a product container 23 through a double damper 19. In this manner, the recovery of $CaCl_2$ in solid form is attained by a closed system. However, it is to be noted that various alterations or modifications can be added to the particular example shown.

Example

A spent treating liquid of an exhaust gas desulfurization process, with a $CaCl_2$ concentration of 16%, and a condensed liquid having a concentration of 38% were sprayed under pressure into a drying chamber at a rate of 25—37 l/m, while hot air having a temperature of 305—320°C at the inlet was blown into the chamber to dry the sprayed liquid. The temperature in the middle portion of the drying chamber was 120—150°C and its internal pressure was 3333 pascals. The product separated by the cyclones was white powder of $CaCl_2 \cdot 2H_2O$ having a particle size of 100—150 μm and a residual moisture content less than 5%.

Claims

1. A process for recovering calcium chloride in solid form from the spent absorbent liquid containing calcium sulfate and calcium chloride obtained in the desulfurization of exhaust gas by the wet lime-gypsum process, which comprises using a thickener for removing impurities including calcium sulfate from said liquid, spraying the liquid into a drying chamber while blowing hot air thereinto, whereby the liquid spray is dried to provide a powder of calcium chloride, and separating and collecting the resulting powder of calcium chloride, characterized in that:—

(a) the dried powder is fed to a solid separator by the action of pressure in the drying chamber and pressurized air from a pneumatic fan as transfer gas, and

(b) the separated air from the separator is filtered to remove fine powder particles and then fed back by the pneumatic fan into the transfer gas to serve as carrier for transporting dried powder from the drying chamber to the separator.

2. Process according to Claim 1, characterized in that the said solid separator is a cyclone.

3. Apparatus for recovering calcium chloride in solid form from spent absorbent liquid containing calcium sulfate and calcium chloride obtained in the desulfurization of exhaust gas by the wet lime-gypsum process, characterized in that it comprises:—

(a) a thickener for removing impurities including calcium sulfate from said liquid;

(b) a drying chamber for drying said liquid;

(c) a nozzle mounted in the upper portion of said drying chamber for spraying said liquid thereinto;

(d) a blowing opening provided in an upper portion of said drying chamber for blowing hot air thereinto to dry the sprayed liquid and thereby produce a powder of calcium chloride;

(e) transfer means connected to the bottom of the drying chamber for collecting the dried powder of calcium chloride and transferring it to a solid separator;

(f) a filter for removing fine particles from the separated air from the solid separator; and

(g) a pneumatic fan for feeding back at least part of the separated air from the said filter to serve again as carrier gas in transfer means (e).

4. Apparatus according to Claim 3, characterized in that the said solid separator is a cyclone.

5. Apparatus according to Claim 3 or Claim 4, characterized in that said nozzle and blowing inlet are arranged so that the sprayed liquid and the hot air are contacted in parallel flow.

**Patentansprüche**

1. Verfahren zur Rückgewinnung von Kalziumchlorid in fester Form von der verbrauchtes Kalziumsulfat und Kalziumchlorid enthaltenden Absorberflüssigkeit, die bei der Entschwefelung von Abgas durch das Kalk-Gipsnaßverfahren erhalten wird, wobei ein Eindicker zur Entfernung von Verunreinigungen einschließlich Kalziumsulfat aus dieser Flüssigkeit verwendet und die Flüssigkeit in eine Trockenkammer gesprüht wird, während Heißluft hineingeblasen wird und so die Sprühflüssigkeit unter Bildung eines Pulvers von Kalziumchlorid getrocknet und das erhaltene Pulver von Kalziumchlorid abgetrennt und gesammelt wird, dadurch gekennzeichnet, daß

(a) das getrocknete Pulver einem Feststoffseparator durch die Einwirkung von Druck in der Trockenkammer und Druckluft von einem pneumatischen Ventilator als Transfergas zugeführt wird und

(b) die abgetrennte Luft vom Separator zur Entfernung feiner Pulverteilchen gefiltert und dann durch den pneumatischen Ventilator zum Transfergas zurückgeführt wird, um als Träger für den Transport von getrocknetem Pulver aus der Trockenkammer zum Separator zu dienen.

2. Verfahren nach Anspruch 1, dadurch gekennzeichnet, daß dieser Feststoffseparator ein Cyclon ist.

3. Vorrichtung zur Gewinnung von Kalziumchlorid in fester Form von der verbrauchtes Kalziumsulfat und Kalziumchlorid enthaltenden Absorberflüssigkeit, die bei der Entschwefelung von Abgas durch das Kalk-Gipsnaßverfahren erhalten wird, dadurch gekennzeichnet, daß sie aufweist:

(a) einen Eindicker zur Entfernung von Verunreinigungen einschließlich Kalziumsulfat aus dieser Flüssigkeit;

(b) eine Trockenkammer zur Trocknung dieser Flüssigkeit;

(c) eine Düse, die im oberen Teil dieser Trockenkammer zum Einsprühen dieser Flüssigkeit in diese hinein angeordnet ist;

(d) eine Blasöffnung in einem oberen Teil dieser Trockenkammer zum Einblasen von Heißluft in diese zur Trocknung der versprühten Flüssigkeit und dadurch Erzeugung eines Pulvers von Kalziumchlorid;

(e) Transportmittel, die mit dem Boden der Trockenkammer verbunden sind zur Sammlung des getrockneten Pulvers von Kalziumchlorid und zum Transport desselben zu einem Feststoffseparator;

(f) ein Filter zum Entfernen von feinen Teilchen aus der abgetrennten Luft vom Feststoffseparator; und

(g) einen pneumatischen Ventilator zur Rückführung von wenigstens einem Teil der abgetrennten Luft von diesem Filter, um wieder als Trägergas in der Transporteinrichtung (e) zu dienen.

4. Vorrichtung nach Anspruch 3, dadurch gekennzeichnet, daß der Feststoffseparator ein Cyclon ist.

5. Vorrichtung nach Anspruch 3 oder 4, dadurch gekennzeichnet, daß die Düse und der Blaseinlaß so angeordnet sind, daß die versprühte Flüssigkeit und die Heißluft sich in paralleler Strömung berühren.

## Revendications

1. Procédé pour la récupération de chlorure de calcium sous forme solide à partir du liquide absorbant usé contenant du sulfate de calcium et du chlorure de calcium, obtenu lors de la désulfuration des gaz d'évacuation du procédé de désulfuration à la chaux-gypse par voie humide, qui consiste à utiliser un épaississeur pour éliminer dudit liquide les impuretés, y compris le sulate de calcium, à pulvériser le liquide dans une chambre de séchage tout en y insufflant de l'air chaud, le liquide pulvérisé étant séché pour donner une poudre de chlorure de calcium, et à séparer et recueillir la poudre obtenue de chlorure de calcium, caractérisé en ce que

(a) la poudre séchée est introduite dans un séparateur de solides sous l'effet de la pression régnant dans la chambre de séchage et de l'air sous pression provenant d'un ventilateur pneumatique et servant de gaz de transfert, et

(b) l'air séparé du séparateur est filtré pour éliminer les fines particules de poudre, puis est réintroduit par le ventilateur pneumatique dans le gaz de transfert, pour servir de véhicule destiné à transporter la poudre séchée de la chambre de séchage au séparateur.

2. Procédé selon la revendication 1, caractérisé en ce que ledit séparateur de solides est un cyclone.

3. Appareil pour récupérer le chlorure de calcium sous forme solide à partir d'un liquide absorbant usé contenant du sulfate de calcium et du chlorure de calcium, obtenu lors de la désulfuration des gaz d'échappement par le procédé de désulfuration à la chaux-gypse par voie humide, caractérisé en ce qu'il comprend:

(a) un épaississeur pour éliminer dudit liquide les impuretés, y compris le sulfate de calcium;

(b) une chambre de séchage pour sécher ledit liquide;

(c) une buse montée dans la partie supérieure de ladite chambre de séchage, pour y pulvériser ledit liquide;

(d) une ouverture d'insufflation, prévue dans une partie supérieure de ladite chambre de séchage, pour y insuffler de l'air chaud pour sécher le liquide pulvérisé et produire de ce fait une poudre de chlorure de calcium;

(e) un moyen de transfert raccordé au fond de la chambre de séchage pour recueillir la poudre séchée de chlorure de calcium et la transférer à un séparateur de solides;

(f) un filtre pour éliminer de l'air séparé du séparateur de solides les fines particules; et

(g) un ventilateur pneumatique pour renvoyer au moins une partie de l'air séparé provenant dudit filtre, pour servir de nouveau de véhicule gazeux dans le moyen de transfert (e).

4. Appareil selon la revendication 3, caractérisé en ce que ledit séparateur de solides est un cyclone.

5. Appareil selon la revendication 3 ou la revendication 4, caractérisé en ce que ladite buse et ledit orifice d'insufflation sont disposés de façon que le liquide pulvérisé et l'air chaud entrent en contact selon un écoulement parallèle.